# EUROPÄISCHE PATENTSCHRIFT

(11) **EP 3 387 287 B1**
(45) Veröffentlichungstag und Bekanntmachung des Hinweises auf die Patenterteilung: **11.01.2023**
(21) Anmeldenummer: 16797893.1
(22) Anmeldetag: 17.11.2016
(51) Int. Cl.: F16F 1/41

(54) **GUMMI-METALL-FEDERELEMENT**
RUBBER/METAL SPRING ELEMENT
ÉLÉMENT RESSORT EN MÉTAL-CAOUTCHOUC

(30) Priorität: 09.12.2015 DE 102015224744
(43) Veröffentlichungstag der Anmeldung: 17.10.2018
(73) Patentinhaber: ContiTech Luftfedersysteme GmbH, 30165 Hannover (DE)
(72) Erfinder: LINDENBERG, Mark, 30826 Garbsen (DE)
(74) Vertreter: Continental Corporation
(86) Internationale Anmeldenummer: PCT/EP2016/077940
(87) Internationale Veröffentlichungsnummer: WO 2017/097558

(56) Entgegenhaltungen:
- WO-A1-92/15800
- WO-A1-94/01695
- DE-U- 1 927 467
- US-A1- 2007 145 654

## Beschreibung

Die Erfindung betrifft ein Gummi-Metall-Federelement, insbesondere zur Verwendung in Fahrwerken von Schienenfahrzeugen, wobei das Gummi-Metall-Federelement zwischen einem oberen und mit der gefederten Masse verbundenen Anschlusselement und einem unteren und mit der ungefederten Masse verbundenen Anschlusselement angeordnet und als konische Schichtfeder aus mehrenen abwechselnd und konzentrisch angeordneten Lagen aus elastomerem Material bzw. Gummi einerseits und Metall andererseits aufgebaut ist.

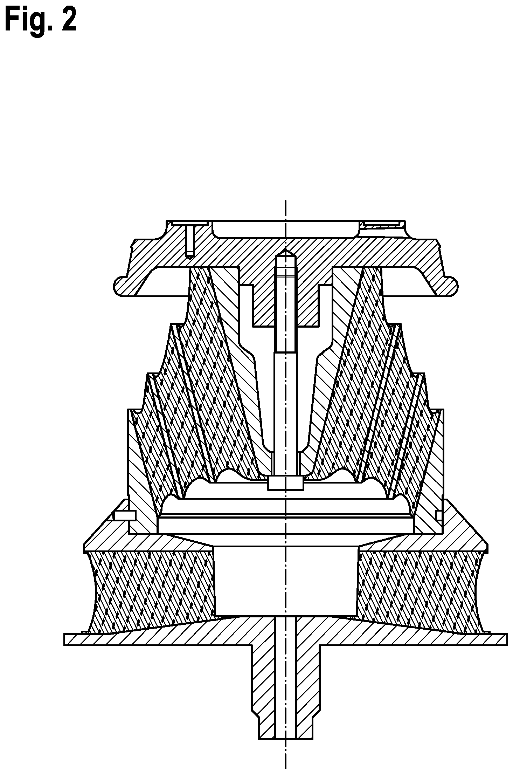

Fig. 2 zeigt ein solches Element aus dem Stand der Technik.

Gummi-Metall-Federelemente, insbesondere für Sienenfahrzeuge, bestehen häufig aufgrund ihrer Anforderungen an die zu erfüllenden Steifigkeiten und Stabilitäten bei Verformung aus einer Kombination von Schicht- und Konusfedern. Diese sind allgemein üblich und bekannt. Dabei stellt die Schichtfeder die laterale Beweglichkeit zu Verfügung. Die Konusfeder ermöglicht hauptsächlich eine vertikale Beweglichkeit mit eingestellten Steifigkeiten, welche insbesondere für die Entgleisungssicherheit des Zuges verantwortlich sind. Schichtfedern bestehen häufig aus mehreren horizontal durch Zwischenbleche geteilten Schichten. Konusfedern bestehen häufig aus mehreren konisch angestellten Schichten, welche durch Zwischenbleche geteilt werden. Diese Zwischenbleche weisen eine einheitliche Materialdicke auf.

Nachteile dieser Bauform sind:
- Die Verwendung von zwei Bauteilen, welche aufgrund ihrer Funktionsteilung deutlich mehr Bauraum vor allem in der Höhe benötigen.
- Es müssen zwei Vulkanisationsformen beschafft werden (Kosten)
- Es wird zweimal Vulkanisationszeit auf einer Presse verbraucht.
- Die Verbindungselemente zwischen den zwei Bauteilen müssen relativ aufwändig spanend bearbeitet werden(höheres Gewicht, teurere Bauteile)
- Die Verbindungselemente müssen sicher und Korrosionsgeschützt montiert werden(Montageaufwand, Korrosionsgefahr)
- Aufgrund ihrer Bauform neigen solche Kombinationen bei lateraler Verformung zum Kippen. Das hat eine negative Auswirkung auf die Einsetzbarkeit des Bauteiles Andere Gummi-Metall-Elemente, wie z.B. Tonnenfedern, benötigen aufgrund ihrer großen ungebundenen Gummioberfläche deuitlich mehr Bauraum, insbesondere im Durchmesser, können schlecht in ihren vertikalen Federeigenschaften einegstellt werden und neigen auch zum Kippen bei lateraler Auslenkung

Dokument WO 92/15800 A1, welches als der nächstliegende Stand der Technik angesehen wird, offenbart die Merkmale des Oberbegriffs des Anspruchs 1.

Für die Erfindung bestand also die Aufgabe, die guten technischen Eigenschaften(Beweglichkeit, gut einstellbare unterschiedliche Lateral- und Vertikalsteifigkeiten) einer Konus- und Schichtfederkobination in sehr kompakter Bauform mit deutlich geringerem Gewicht, geringerem techn. Aufwand in der Herstellung/Montage bei gleichzeitig besserer Korrosionsbeständigkeit zu ermöglichen.

Außerdem sollte die nachteilige Eigenschaft von Schichtfedern, bei zunehmender Vertikallast geringere Lateralsteifigkeiten aufzuweisen (Spannungs- bzw. Lasterweichung), vermieden werden, denn der daraus resultierenden negative Effekt(Last- und Auslenkungsinstabilität) insbesondere für Luftfedersysteme begrenzt die Einsetzbarkeit der Bauteile, insbesondere die der Luftfedersysteme Gelöst wird diese Aufgabe durch die Merkmale des Hauptanspruchs. Weitere vorteilhafte Ausbildungen sind in den Unteransprüchen offenbart.

Dabei sind die einzelnen Lagen als kegelförmige Ringkörper ausgebildet, wobei die beiden kegeligen Oberflächen von mindestens einem der kegelförmige Ringkörper unterschiedliche Kegelwinkel in Bezug auf die gemeinsame Hochachse der die konische Schichtfeder bildenden konzentrischen Lagen aus Gummi bzw. Metall aufweisen.

Die einzelnen Gummischichten der kompakten Feder werden gemäß ihrer gewünschten Funktion mit unterschiedlichen Schichtwinkeln und Schichtdurchmessern angeordnet. Dieses wird ermöglicht durch die Verwendung von Verbindungselementen, welche im Gegensatz zu den klassischen Blechen eine unterschiedliche Geometrie zu den einzelnen Gummischichten aufweisen.

Die Unterschiede können aus unterschiedlichen Winkeln und/oder Durchmessern, bzw. frei konturierten Oberflächen je Verbindungsoberfläche bestehen. Aufgrund einer günstigen Kombination an verschiedenen Schichten kann ein Spannungserweichen und somit eine erhöhte Kippanfälligkeit nicht nur vermieden werden, es tritt sogar ein stabilisierenden Effekt ein (Gegenkippen bei lateraler Auslenkung aufgrund der Geometrie), durch den sogar Kippefekte aus einer möglicherweise in Reihe geschalteten Luftfeder kompensiert werden. Dieses erhöht die Einsetzbarkeit von Luftfedersystemen bei lateraler Auslenkung deutlich(Mehr Last und mehr Auslenkung ist möglich).

Erfindungsgemäß weist mindestens eine der kegeligen Oberflächen mindestens eines kegelförmigen Ringkörpers eine von einem glatten Hohlkegel abweichende strukturierte Form oder Wellenform auf, vorzugsweise über den gesamten Kegelumfang. Hierdurch kann die Feder auf besondere Einsatzform angepasst werden und eine Verringerung der Kitt-oder ausknicken Einigung erreicht werden. Dies ist insbesondere in Verbindung mit einer weiteren vorteilhaften Ausbildung der Fall, die darin besteht das die kegeligen Oberflächen mindestens zweier aneinander vulkanisierten kegelförmigen Ringkörper über ihren Kegelumfang eine von einem glatten Hohlkegel abweichende strukturierte Form oder Wellenform aufweisen.

Eine weitere vorteilhafte Ausbildung besteht darin, dass die abwechselnd und konzentrisch angeordneten Lagen aus elastomerem Material bzw. Metall über ihren Kegelverlauf von innen nach außen unterschiedliche Schichtdicken aufweisen. Insbesondere dann, wenn die Schichtdicke mindestens einer konzentrisch angeordneten Lage an deren Innendurchmesser geringer ausgebildet ist als an deren Außendurchmesser, ergibt sich ein vergrößertes Abstützmoment durch das so gestaltete Gummi-Metall-Federelement, so dass eine geringe Kipp-und Ausknick-Neigung aufgrund eines Stabilisierungseffektes der unterschiedlichen Schichten bei lateraler Verformung entsteht. Dadurch wird das Kippmoment der Luftfeder bei lateraler Auslenkungen kompensiert. Somit resultiert ein deutlich gesteigertes lineares Verhalten des Luftfeder Systems bei lateraler Auslenkungen und eine Instabilität des Luftfeder Systems wird vermieden. Dadurch können Luftfedersysteme gleicher Baugröße bei höheren Lasten und lateralen Auslenkungen betrieben werden.

Eine weitere vorteilhafte Ausbildung besteht darin, dass die abwechselnd und konzentrisch angeordneten Lagen aus elastomerem Material bzw. Metall unterschiedliche Kegelwinkel bzw. Schichtwinkel aufweisen, insbesondere dann, wenn man die mittleren Kegelwinkel betrachtet, d.h die Mittelung zwischen den unterschiedlichen Kegelwinkel Innen-und Außenoberfläche der einzelnen kegelförmigen Ringkörper. Dies erhöht weiter das lineare Verhalten des Luftfedersystems, wodurch der Fahrkomfort gesteigert wird. Auch die Sicherheit gegen Entgleisen wird gesteigert, weil die Steifigkeiten bei kleinen lateralen Auslenkungen abgesenkt werden.

Bei der erfindungsgemäßen Ausbildung vermeidet man eine eine Last- und Spannungserweichung über höhere Vertikallasten bei lateraler Auslenkung.

Auch ergibt sich ein geringerer Verschleiß(Abrieb) der Luftfeder am Felgensitz und der Wulstringeinspannung durch eine parallele Bewegung der oberen und unteren Einspannung. Durch diese parallele Bewegungen der oberen und unteren Einspannung treten in der Luftfeder geringeren Spannungen auf und es ergibt sich natürlich auch eine erhöhte Lebensdauer.

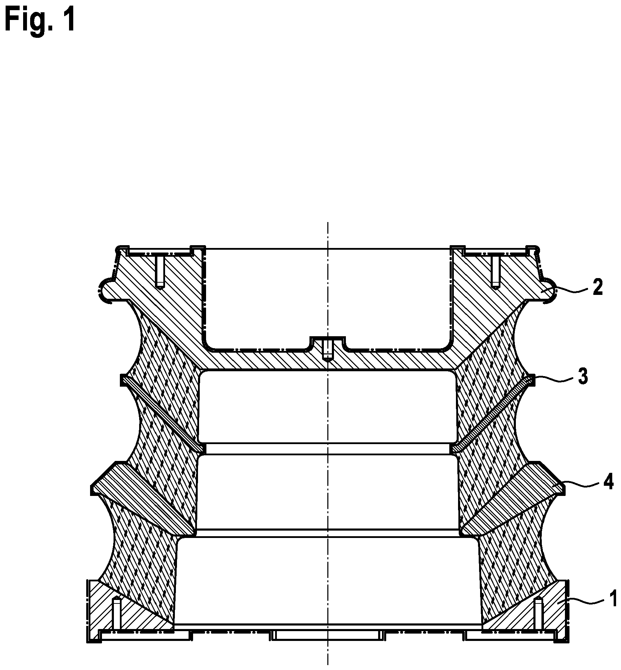

Fig. 1 zeigt eine erfindungsgemäße Ausführung des Gummi-Metall-Federelementes.

## Patentansprüche

1. Gummi-Metall-Federelement, insbesondere zur Verwendung in Fahrwerken von Schienenfahrzeugen, wobei das Gummi-Metall-Federelement zwischen einem oberen und mit der gefederten Masse verbundenen Anschlusselement und einem unteren und mit der ungefederten Masse verbundenen Anschlusselement angeordnet und als konische Schichtfeder aus mehrenen abwechselnd und konzentrisch angeordneten Lagen aus elastomerem Material bzw. Gummi einerseits und Metall andererseits aufgebaut ist, wobei die einzelnen Lagen als kegelförmige Ringkörper ausgebildet sind, wobei die beiden kegeligen Oberflächen mindestens eines kegelförmigen Ringkörpers unterschiedliche Winkel bzw. Kegelwinkel in Bezug auf die gemeinsame Hochachse der die konische Schichtfeder bildenden konzentrischen Lagen aus Gummi bzw. Metall aufweisen, **dadurch gekennzeichnet, dass** mindestens eine der kegeligen Oberflächen mindestens eines kegelförmigen Ringkörpers eine von einem glatten Hohlkegel abweichende strukturierte Form oder Wellenform aufweist, vorzugsweise über den gesamten Kegelumfang.

2. Gummi-Metall-Federelement nach Anspruch 1, bei dem die kegeligen Oberflächen mindestens zweier aneinander vulkanisierten kegelförmigen Ringkörper über ihren Kegelumfang eine von einem glatten Hohlkegel abweichende strukturierte Form oder Wellenform aufweisen.

3. Gummi-Metall-Federelement nach einem der Ansprüche 1 oder 2, bei dem die abwechselnd und konzentrisch angeordneten Lagen aus elastomerem Material bzw. Metall über ihren Kegelverlauf von innen nach außen unterschiedliche Schichtdicken aufweisen.

4. Gummi-Metall-Federelement nach Anspruch 3, bei dem die Schichtdicke mindestens einer konzentrisch angeordneten Lage an deren Innendurchmesser geringer ausgebildet ist als an deren Außendurchmesser.

5. Gummi-Metall-Federelement nach einem der Ansprüche 1 bis 4, bei dem die abwechselnd und konzentrisch angeordneten Lagen aus elastomerem Material bzw. Metall unterschiedliche Kegelwinkel bzw. Schichtwinkel aufweisen.

## Claims

1. Rubber-metal spring element, in particular for use in running gears of rail vehicles, wherein the rubber-metal spring element is arranged between an upper connection element, which is connected to the sprung mass, and a lower connection element, which is connected to the unsprung mass, and is constructed as a conical layered spring composed of multiple alternately and concentrically arranged layers of elastomer material or rubber, on the one hand, and metal, on the other hand, wherein the individual layers are formed as conical ring-shaped bodies, wherein the two conical surfaces of at least one conical ring-shaped body have different angles or cone angles in relation to the common vertical axis of the concentric layers of rubber and metal which form the conical layered spring, **characterized in that** at least one of the conical surfaces of at least one conical ring-shaped body has a structured shape or undulating shape which deviates from a smooth hollow cone, preferably over the entire cone circumference.

2. Rubber-metal spring element according to Claim 1, in which the conical surfaces of at least two conical ring-shaped bodies vulcanized onto one another have, over their cone circumference, a structured shape or undulating shape which deviates from a smooth hollow cone.

3. Rubber-metal spring element according to either of Claims 1 and 2, in which the alternately and concentrically arranged layers of elastomer material and metal have layer thicknesses which vary from the inside to the outside over their cone profile.

4. Rubber-metal spring element according to Claim 3, in which the layer thickness of at least one concentrically arranged layer is formed so as to be smaller at its inner diameter than at its outer diameter.

5. Rubber-metal spring element according to one of Claims 1 to 4, in which the alternately and concentrically arranged layers of elastomer material and metal have different cone angles or layer angles.

## Revendications

1. Élément élastique en métal et caoutchouc, destiné en particulier à être utilisé dans des mécanismes de roulement de véhicules ferroviaires, l'élément élastique en métal et caoutchouc étant disposé entre un élément de raccordement supérieur relié à la masse élastique et un élément de raccordement inférieur relié à la masse non-élastique et étant construit comme un ressort stratifié conique comprenant une pluralité de couches disposées alternativement et concentriquement et comprenant une matière élastomère ou un caoutchouc d'autre part et un métal d'autre part, les couches individuelles étant conçues comme des corps d'anneau coniques, les deux surfaces coniques d'au moins un corps d'anneau conique ayant des angles ou des angles de cône différents par rapport à l'axe vertical commun des couches concentriques de caoutchouc ou de métal qui forment le ressort stratifié conique, caractérisé en qu'au moins une des surfaces coniques d'au moins d'un corps d'anneau conique a une forme structurée ou une forme ondulée différente d'un cône creux lisse, de préférence sur toute l'étendue du cône.

2. Élément élastique en métal et caoutchouc selon la revendication 1, dans lequel les surfaces conique ont au moins deux corps d'anneau conique, vulcanisé l'un à l'autre, sur leur étendue de cône ont une forme structurée ou une forme ondulée différente d'un cône creux lisse.

3. Élément élastique en métal et caoutchouc selon l'une des revendications 1 ou 2, dans lequel les couches disposées alternativement et concentriquement et comprenant une matière élastomère ou un métal ont différentes épaisseurs de couche de l'intérieur vers l'extérieur sur toute l'étendue du cône.

4. Élément élastique en métal et caoutchouc selon la revendication 3, dans lequel l'épaisseur de couche d'au moins d'une couche concentrique est plus faible sur le diamètre intérieur de celle-ci que sur le diamètre extérieur de celle-ci.

5. Élément élastique en métal et caoutchouc selon l'une quelconque des revendications 1 à 4, dans lequel les couches disposées alternativement et concentriquement et comprenant une matière élastomère ou un métal ont des angles de cône ou des angles de couche différents.
